# EUROPÄISCHE PATENTANMELDUNG

(11) **EP 1 591 546 A1**
(43) Veröffentlichungstag der Anmeldung: **02.11.2005**
(21) Anmeldenummer: 05450076.4
(22) Anmeldetag: 27.04.2005
(51) Int. Cl.: C22B 7/02, C22B 7/04, C22B 5/16, C22B 19/30, F27D 3/18, F23D 1/00

(54) **Verfahren zum Rückgewinnen von Metallen und/oder Metalloxiden aus Stahlwerkstäuben**

(30) Priorität: 27.04.2004 AT 7212004
(71) Anmelder: Patco Engineering GmbH, 6300 Zug (CH)
(72) Erfinder: Goriup Eirich Ing, A-3500 Krems (AT); Antrekowitsch Jürgen Dipl Ing Dr mont, A-8700 Leoben (AT); Graller-Kettler Gemot Dipl ,Ing Dr mont, A-8793 Trofaiach (AT)
(74) Vertreter: Haffner, Thomas M.

(57) **Zusammenfassung**

Bei einem Verfahren zum Rückgewinnen von Metallen und/oder Metalloxiden wie z.B. Zn und Fe aus Stahlwerkstäuben werden die Stäube mit Trägergas in eine Brennkammer eingebracht und unter oxidierenden Bedingungen eingeschmolzen. Aus der Brennkammer werden flüchtige Halogenide abgezogen und die von Halogeniden weitestgehend freie oxidische Schmelze wird in einem Eisenbadreaktor mit einem C-Gehalt von > 1,5 Gew.% reduziert, wobei flüchtige Metalldämpfe wie z.B. Zn-Dampf abgezogen werden.

## Beschreibung

Die Erfindung bezieht sich auf ein Verfahren zum Rückgewinnen von Metallen und/oder Metalloxiden wie z.B. Zn und Fe aus Stahlwerkstäuben.

Aus der AT 411 363 B ist eine Einrichtung zum Schmelzen von Stäuben bekannt geworden, bei welcher Stäube axial und Trägergas tangential in eine Misch- und Dosiereinrichtung eingebracht werden, wobei die Misch- und Dosiereinrichtung über eine im wesentlichen axial gerichtete Austragsöffnung mit einer Brennkammer verbunden ist. Eine derartige Einrichtung eignet sich ganz besonders zur Aufarbeitung von Feststoffpartikeln und insbesondere Stahlwerkstäuben, bei welchen unter oxidierenden Bedingungen in der Folge Schmelzen gebildet werden. Zum einen läßt sich mit einer derartigen Einrichtung auch überaus abrasives Rohmaterial einsetzen, wobei zum anderen durch eine entsprechende Ausbildung eines Dralls in der Brennkammer die Ablagerung agressiver Schmelzen an den Kammerwänden verhindert werden kann und insgesamt wesentlich geringere Mengen an Feuerfestmaterial erforderlich sind, um einen sicheren Betrieb zu gewährleisten. Prinzipiell können Stahlwerksstäube naturgemäß mit beliebigen Staubbrennern erschmolzen werden, wobei zu diesem Zweck bekannte Injektoren entsprechend gegen Verschleiß gesichert werden müssen. In der Brennkammer erfolgt ein Schmelzen der Stäube bei relativ hohen Temperaturen von in der Regel 1200° C bis 1650° C. Die oxidierenden Bedingungen werden beispielsweise im Brenner eingestellt.

Stahlwerkstäube stellen einen überaus problematischen Reststoff der Stahlindustrie dar, da eine Reihe von Schwermetallen relativ leicht eluierbar sind. Auch Halogene und Alkalien führen zu einer Einstufung dieser Stäube als gefährlicher Abfall, was zur Folge hat, dass eine Deponierung derzeit nur mittels kostenintensiver Inertisierung über Tage bzw. alternativ nur unter Tage möglich ist.

Stahlwerkstäube enthalten unterschiedliche Mengen an Zink und im Fall von hochzinkhältigen Stahlwerkstäuben kann der Zinkgehalt bis zu etwa 40 Gew.% betragen. Die meisten Verfahren für mittel- oder niedrigzinkhaltige Stäube aus Hüttenwerken sind meist unwirtschaftlich. Eine Wirtschaftlichkeit kann in der Regel nur dann gewährleistet sein, wenn mit relativ billigen Brennstoffen gearbeitet werden kann und wenn gleichzeitig der Verschleiß der für die Durchführung des Verfahrens zum Einsatz gelangenden Einrichtungen und insbesondere von Feuerfestmaterial entsprechend minimiert werden kann.

Die Erfindung zielt darauf ab, bei größter Flexibilität im Hinblick auf Zn und Eisengehalt und Basizitätsgrad ein hochreines Zinkprodukt sowie ein verwertbares Eisen- und Schlackenprodukt herzustellen und wenig Rückstände bei vergleichsweise geringen Emissionen zu erzielen.

Das erfindungsgemäße Verfahren zum Rückgewinnen von Metallen und/oder Metalloxiden aus Stahlwerkstäuben ist zur Lösung dieser Aufgabe im wesentlichen dadurch gekennzeichnet, dass die Stäube mit Trägergas in eine Brennkammer eingebracht und unter oxidierenden Bedingungen eingeschmolzen werden, dass aus der Brennkammer flüchtige Halogenide wie z.B. PbCl₂ oder Alkalihalogenide abgezogen werden und dass die von Halogeniden weitestgehend freie oxidische Schmelze in einem Eisenbadreaktor mit einem C-Gehalt von > 1,5 Gew.% reduziert wird, wobei flüchtige Metalldämpfe wie z.B. Zn-Dampf abgezogen werden. Prinzipiell ist davon auszugehen, dass wenn Zink gewonnen werden soll, die Existenz von Zinkhalogeniden im Endprodukt die weitere Reinigung bzw. das Raffinieren wesentlich beeinträchtigt. So führen bei der elektrolytischen Reinigung von Zink ggf. vorhandene Halogenide zu einem raschen Verschleiß der Elektroden und zu einer unzureichenden Reinigung des zu reinigenden Zinks. Halogenide und insbesondere Fluoride stellen aber nun überaus starke Oxidationsmittel dar, welche durch eine Sauerstoffatmosphäre bei hohen Temperaturen nicht ohne weiteres aus ihren Salzen ausgetrieben werden können. Andererseits stehen aber chemische Reaktionen wie beispielsweise die Oxidation von Zinkoxid zu Zinkfluorid sowie die entsprechenden Halogenide mit den jeweiligen Oxiden in einem thermodynamischen Gleichgewicht. In der Gasphase einer Schmelze von Stahlwerkstäuben können daher flüchtige Halogenide in ihrer jeweiligen Gleichgewichtskonzentration vorliegen, welche in der Folge entsprechend abgezogen werden können, wodurch das Gleichgewicht fließend verschoben wird. Durch das kontinuierliche Abziehen von gasförmigen Halogeniden über der oxidischen Schmelze aus der Brennkammer gelingt es somit, Halogenide abzutrennen und eine von Halogeniden weitestgehend freie oxidische Schmelze zu bilden, welche in der Folge in einem Eisenbadreaktor entsprechend reduziert werden kann. Der Eisenbadreaktor muss hierbei lediglich ein entsprechendes Reduktionspotential aufweisen, was durch eine entsprechende Aufkohlung des Eisenbades ohne weiteres gelingt. Da bei der Reduktion von Zinkoxiden entsprechend metallisches Zink gebildet wird, kann über einem derartigen Eisenbadreaktor unmittelbar Zink in der Gasphase und gegebenenfalls in der Folge ZnO in hoher Reinheit abgezogen werden. Gleichzeitig gelingt es, Eisenoxide zu Reineisen zu reduzieren, wobei ggf. vorhandene Legierungselemente, wie z.B. Cr, V, Mn in das Metallbad reduziert werden.

In besonders vorteilhafter Weise wird das erfindungsgemäße Verfahren so durchgeführt, dass die Stäube in axialer Richtung und Trägergas bzw. Verbrennungsluft in tangentialer Richtung in eine Misch- und Dosiereinrichtung eingebracht werden und aus dieser unmittelbar in eine Brennkammer übergeführt werden.

Um im Bereich des Eisenbadreaktors die Ausbildung oxidischer Bedingungen mit Sicherheit zu unterbinden wird mit Vorteil so vorgegangen, dass das Eisenbad in einem Tiegel vorgelegt wird und durch Auf- oder Einblasen von Inertgasen in die Schlacke oder das Bad bewegt wird, wobei die Inertgase als Trägergas für die Aufkohlung mit Kohlenstoff verwendet werden, wobei vorzugsweise aus dem Eisenbadreaktor Zn bei Temperaturen von über 1450° C mit gebildetem CO abgezogen wird.

Insgesamt wird durch die oxidierende Atmosphäre in der Brennkammer die vorzeitige Reduktion von Zink verhindert, wobei an dieser Stelle im Falle der Anwesenheit von Halogeniden in erster Linie flüchtige Fluoride und Chloride verdampfen, welche über eine entsprechende Abgasanlage praktisch vollständig abgeführt werden können. Die flüchtigen Fluor- und Chlorverbindungen führen insgesamt beispielsweise zu einer Abtrennung von Blei und Halogenen auf Werte von weit unter 0,1 Gew.%. Je nach Zusammensetzung der Stahlwerkstäube sind unterschiedlich agressive Bedingungen für Feuerfestauskleidungen zu beobachten. Durch die Verwendung der oben erwähnten Misch- und Dosiereinrichtung wird in der Brennkammer eine entsprechende Verwirbelung erzielt, welche den Kontakt der Schmelze mit der Ausmauerung auf ein Minimum beschränken läßt. Der axiale Staubeintrag und der tangentiale Einstoß von Trägergas erlaubt es für eine relativ weiten Bereich an unterschiedlichen Basizitätsgraden mit der gleichen Feuerfestauskleidung auszukommen.

Prinzipiell ist mit dem erfindungsgemäßen Verfahren von einer ausreichenden Entfernung von Chloriden auszugehen. Lediglich bei hohen Mengen an Fluoriden, wie beispielsweise CaF₂, welche gleichfalls für die Weiterverarbeitung ein ernst zu nehmendes Problem darstellen, können zusätzliche Maßnahmen wie insbesondere eine Pyrohydrolyse in Betracht gezogen werden. Derartige zusätzliche Hydrolyseschritte, wie sie beispielsweise durch Einblasen von Wasserdampf oder aber auch durch Verbrennen von Kohlenwasserstoffen ermöglicht werden.

Zur Aufarbeitung des gebildeten Zinkdampfes kann erfindungsgemäß mit Vorteil so vorgegangen werden, dass der abgezogene Zn-Dampf in einem geschlossenen Kondensator bei Temperaturen über 450° C und unter der Verdampfungstemperatur von Zn in eine flüssige Phase kondensiert wird, wobei vorzugsweise das gebildete Zn-Bad abgestochen und in Gießformen verbracht oder granuliert wird.

Prinzipiell erfordert die Durchführung des erfindungsgemäßen Verfahrens ein Durchlaufen von mehreren Teilprozessen. Ausgehend von Stahlwerkstäuben mit der nachfolgenden beispielhaften Zusammensetzung

| Stoffe | ZnO | PbO | Fe₂O₃ | CaO | MnO | Al₂O₃ | MgO | SiO₂ | Cl | F |
|---|---|---|---|---|---|---|---|---|---|---|
| Gehalt [%] | 28,2 | 0,8 | 36,0 | 6,2 | 2,2 | 2,6 | 2,3 | 9,5 | 1,35 | 0,02 |

erfolgt zunächst ein entsprechender Schmelzvorgang. Die Mengenanteile für Zink und Eisen liegen in Stahlwerkstäuben häufig höher, sodass es sich bei diesen beiden Elementen um die sogenannten Zielsubstanzen handelt, die in entscheidendem Maß für die Wirtschaftlichkeit und den Erfolg des Verfahrens verantwortlich sind. Nach dem Abtrennen der Halogenide im Schmelzreaktor, d.h. der Brennkammer, wird die Schlacke in einen Eisenbadreaktor eingebracht, wobei über diesem Reaktor ein entsprechender Zinkkondensator vorgesehen ist, welcher die Rückgewinnung von Zink in metallischer Form ermöglicht. Wenn eine Nachverbrennung eingesetzt wird, kann hochreines ZnO aus dem Abgasstrom ausgebracht werden. Theoretisch kann auch an eine Rückgewinnung von Zink in oxidischer Form gedacht werden, da auch in diesem Falle zumindest der Vorteil erreicht wird, dass derartige Zinkoxide von Halogeniden frei sind. Die Schlacke und das Metall werden voneinander getrennt, wobei der Regulus eingebrachtes Eisen samt Legierungselementen bindet und ein hochwertiges Produkt darstellt.

Das feinkörnige Material kann in die Brennkammer mit einem Trägergas eingestoßen werden, wobei hierfür beispielsweise Luft zum Einsatz gelangen kann. Um eine oxidierende Atmosphäre aufrecht zu erhalten, muss Sauerstoff überstöchiometrisch eingebracht werden, wobei Temperaturen um 1500° C ggf. unter Verwendung von Heißwind erreicht werden können.
Der nachfolgend vorgesehene Eisenbadreaktor führt zur Produktion von flüssigem Eisen bzw. Legierungen aus den Stäuben, einer entsprechend hochwertigen von Schwermetallen gereinigten Schlacke sowie von Zinkdampf. Das Eisenbad wird in einem derartigen Tiegel auf ca. 1500° C gehalten, wobei die Schmelze direkt auf das Eisenbad aufgebracht werden kann. Eine entsprechende Lanzen- und/oder Bodenspülung kann für die erforderliche Badbewegung durch Einblasen von Inertgasen herangezogen werden. Gleichzeitig können derartige Gase als Trägersubstanzen für zur Aufkohlung des Bades erforderlichen Kohlenstoff eingesetzt werden, wodurch sichergestellt wird, dass Eisen- und Zinkoxide entsprechend reduziert werden.

Das Abgas über dem Eisenbadreaktor besteht aus dem eingebrachten Trägergas, Kohlenmonoxid und Zinkdampf. Aufgrund der überstöchiometrischen Zugabe von Kohlenstoff und den relativ hohen Temperaturen liegt das Boudouard-Gleichgewicht weitestgehend auf der Seite von Kohlenmonoxid, sodass keinerlei Anteile von CO₂ zu erwarten sind. Ein Aufoxidieren von Zink im sich abkühlenden Abgasstrom kann auf diese Weise weitestgehend ausgeschlossen werden.

Wenn metallisches Zink als Produkt angestrebt wird, ist es von Vorteil, den Kondensator als gegenüber der Umgebung vollständig abgeschlossenes Gefäß zu konstruieren. Der Betrieb des Eisenbadreaktors und damit auch des Zinkkondensators erfolgt hier diskontinuierlich, wobei der Übergang Reaktor zum Kondensator auf einer Temperatur von etwa 900° C gehalten werden muss und diese Temperatur im Kondensator mit Vorteil auf minimal 450° C sinken darf, um flüssiges Zink zu erhalten. Prinzipiell sollte die Kondensation relativ rasch erfolgen, sodass das Abgas in relativ kurzer Zeit möglichst vollständig von Zink befreit wird und in einer nachfolgenden Filteranlage behandelt werden kann. Auf diese Weise wird nämlich wiederum sichergestellt, dass eine Verlagerung des kinetisch gehemmten Boudouard-Gleichwichts in Richtung CO₂ vermieden wird.
Das entzinkte Gas kann aufgrund seines hohen CO-Anteils mit Vorteil nachverbrannt werden und durch Grob- und/oder Feinstaubabscheidung entsprechend gereinigt werden. Der entstehende Staub kann mit der Schmelze bzw. dem Trägergas wieder in den Eisenbadreaktor rückgeführt werden, um ggf. noch vorhandene Wertstoffe entsprechend zu recyclieren.

## Patentansprüche

1. Verfahren zum Rückgewinnen von Metallen und/oder Metalloxiden wie z.B. Zn und Fe aus Stahlwerkstäuben, **dadurch gekennzeichnet, dass** die Stäube mit Trägergas in eine Brennkammer eingebracht und unter oxidierenden Bedingungen eingeschmolzen werden, dass aus der Brennkammer flüchtige Halogenide wie z.B. PbCl₂ oder Alkalihalogenide abgezogen werden und dass die von Halogeniden weitestgehend freie oxidische Schmelze in einem Eisenbadreaktor mit einem C-Gehalt von > 1,5 Gew.% reduziert wird, wobei flüchtige Metalldämpfe wie z.B. Zn-Dampf abgezogen werden.

2. Verfahren nach Anspruch 1, **dadurch gekennzeichnet, dass** die Stäube in axialer Richtung und Trägergas bzw. Verbrennungsluft in tangentialer Richtung in eine Misch- und Dosiereinrichtung eingebracht werden und aus diesem unmittelbar in eine Brennkammer übergeführt werden.

3. Verfahren nach Anspruch 1 oder 2, **dadurch gekennzeichnet, dass** das Eisenbad in einem Tiegel vorgelegt wird und durch Auf- oder Einblasen von Inertgasen bewegt wird, wobei die Inertgase als Trägergas für die Aufkohlung mit Kohlenstoff verwendet werden.

4. Verfahren nach Anspruch 1, 2 oder 3, **dadurch gekennzeichnet, dass** aus dem Eisenbadreaktor Zn bei Temperaturen von über 1450° C mit gebildetem CO abgezogen wird.

5. Verfahren nach einem der Ansprüche 1 bis 4, **dadurch gekennzeichnet, dass** der abgezogene Zn-Dampf in einem geschlossenen Kondensator bei Temperaturen über 450° C und unter der Verdampfungstemperatur von Zn in eine flüssige Phase kondensiert wird.

6. Verfahren nach Anspruch 5, **dadurch gekennzeichnet, dass** im Abgasstrom eine Nachverbrennung vorgenommen wird und hochreines ZnO abgetrennt wird.
